# EUROPEAN PATENT SPECIFICATION

(11) **EP 1 857 320 B1**
(45) Date of publication and mention of the grant of the patent: **13.10.2010**
(21) Application number: 06010449.4
(22) Date of filing: 20.05.2006
(51) Int. Cl.: B60N 2/427

(54) **Safety seat system for car**
Sicherheitssitzvorrichtung für Wagen
Système de siège de sécurité pour voiture

(43) Date of publication of application: 21.11.2007
(73) Proprietor: Fong, Jian-Jhong, Changhua City, Changhua County (TW)
(72) Inventor: Fong, Jian-Jhong, Changhua City, Changhua County (TW)
(74) Representative: Hellmich, Wolfgang

(56) References cited:
- EP-A2- 1 325 836
- DE-A1- 19 549 379
- FR-A- 1 207 101
- US-A- 3 858 930
- US-A1- 2004 007 893

## Description

The present invention relates to a safety seat system and, more particularly, to a safety seat system for a car.

A conventional passive safety seat system for a car comprises a seat belt mounted on the seat for limiting movement of the driver's body when driving the car so as to protect the driver's body when an accident happens. However, the seat belt cannot protect the driver's body efficiently, so that the driver is easily hurt when the accident happens.

Another conventional passive safety seat system for a car comprises an air bag mounted in the car. Thus, when the car is subjected to an external hitting force, the air bag is exploded to isolate the driver from the car body so as to protect the driver's body when an accident happens. However, the air bag cannot protect the driver's body efficiently, so that the driver is easily hurt when a larger accident happens.

The document US 3,858,930 A, is considered as being the closest prior art, and describes a safety seat system, wherein the car front end is provided with cylinders, and the safety seat system comprises a tilting seat connected to the cylinders, so that when the car is subjected to a frontal collision the seat tilts backwards in order to protect the occupant.

The primary objective of the present invention is to provide a safety seat system, wherein the car body has a periphery provided with a plurality of cylinders, and the safety seat system comprises a displacement tipping device and a seat assembly connected to the cylinders, so that when the car body is subjected to a hit or collision in any direction, the displacement tipping device produces a relative reaction to eliminate or reduce the hitting force and also drives the seat assembly to move toward the central portion of the car body quickly to prevent the driver's body from being hit directly so as to protect the driver's body.

Another objective of the present invention is to provide a safety seat system, wherein when the lower backrest cylinder is operated and expanded due to the hit, the protective wings are moved toward each other to clamp and protect the driver's waist.

A further objective of the present invention is to provide a safety seat system, wherein when the cylinder units are operated and expanded due to the hit, the upper backrest and the headrest are lifted in a forward inclining manner relative to the lower backrest to protect the driver's head and neck.

A further objective of the present invention is to provide a safety seat system, wherein when the headrest cylinder is operated and expanded due to the hit, the drive disk is rotated by one of the wires to rotate the fixing bar to rotate the headrest so as to protect the driver's head.

The objectives are solved by a safety seat system according to the features of claim 1. Preferred embodiments of the invention are presented in the subclaims.

Further benefits and advantages of the present invention will become apparent after a careful reading of the detailed description with appropriate reference to the accompanying drawings.

In the drawings:
Fig. 1 is a top plan cross-sectional view of a car in accordance with the preferred embodiment of the present invention.
Fig. 2 is a side plan cross-sectional view of the car as shown in Fig. 1.
Fig. 3 is a perspective view of a displacement tipping device of a safety seat system in accordance with the preferred embodiment of the present invention.
Fig. 4 is an exploded perspective view of the displacement tipping 5 device as shown in Fig. 3.
Fig. 4A is a locally perspective enlarged view of the displacement tipping device as shown in Fig. 4.
Fig. 4B is a schematic operational view of the displacement tipping device as shown in Fig. 4A.
Fig. 5 is a bottom perspective view of the displacement tipping device as shown in Fig. 3.
Fig. 6 is a perspective view of a seat assembly of the safety seat system in accordance with the preferred embodiment of the present invention.
Fig. 7 is an exploded perspective view of the seat assembly as shown in Fig. 6.
Fig. 8 is a plan cross-sectional view of the seat assembly as shown in Fig. 6.
Fig. 9 is a partially exploded perspective view of the seat assembly as shown in Fig. 6.
Fig. 10 is a schematic side plan operational view of the seat assembly as shown in Fig. 6.
Fig. 11 is a schematic operational view of the displacement tipping device as shown in Fig. 3.
Fig. 12 is a schematic plan view showing the front portions of two cars collide.
Fig. 13 is a schematic operational view of the safety seat system as shown in Fig. 6.
Fig. 14 is a schematic operational view of the displacement tipping device as shown in Fig. 3.
Fig. 15 is a schematic plan view showing one of the two sides of the front portion of the car is hit.
Fig. 16 is a schematic operational view of the safety seat system as shown in Fig. 6.
Fig. 17 is a schematic operational view of the displacement tipping device as shown in Fig. 3.
Fig. 18 is a schematic plan view showing the rear portions of two cars collide.
Fig. 19 is a schematic operational view of the safety seat system as shown in Fig. 6.
Fig. 20 is a schematic operational view of the displacement tipping device as shown in Fig. 3.
Fig. 21 is a schematic plan view showing one of the two sides of the rear portion of the car is hit.
Fig. 22 is a schematic operational view of the safety seat system as shown in Fig. 6.
Fig. 23 is a schematic operational view of the displacement tipping device as shown in Fig. 3.
Fig. 24 is a schematic plan view showing the left side or the right side of the car is hit.
Fig. 25 is a schematic operational view of the safety seat system as shown in Fig. 6.
Fig. 26 is a schematic plan view showing the car is rolling.
Fig. 27 is a top plan cross-sectional view of a car in accordance with another preferred embodiment of the present invention.
Fig. 28 is a locally enlarged view of the car as shown in Fig. 27.

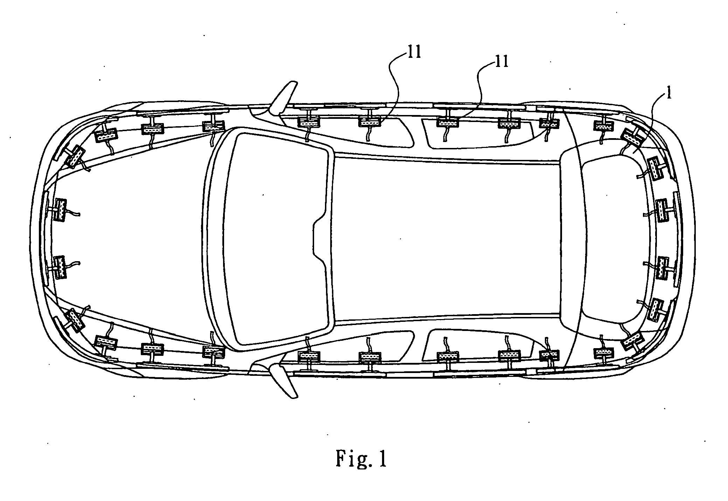

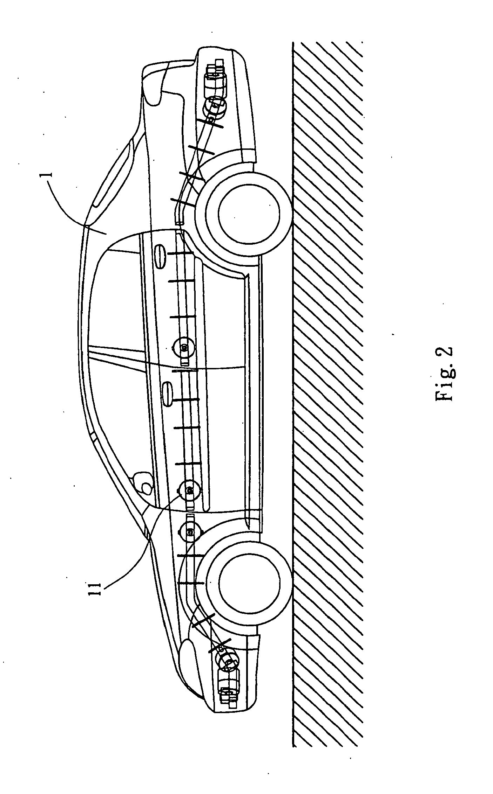

Referring to the drawings and initially to Figs. 1 and 2, a car in accordance with the preferred embodiment of the present invention comprises a car body 1 having a periphery provided with a plurality of lever-type hydraulic cylinders 11, and a safety seat system mounted in the car body 1 and connected to each of the cylinders 11.

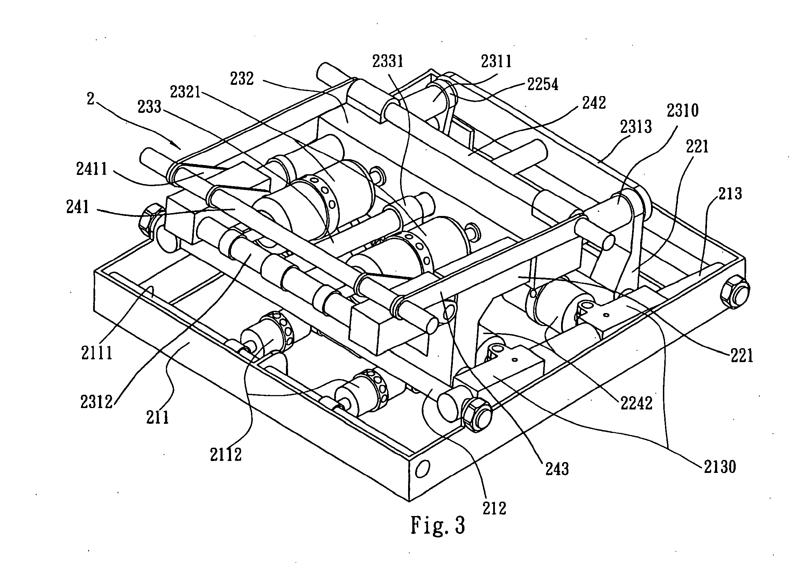

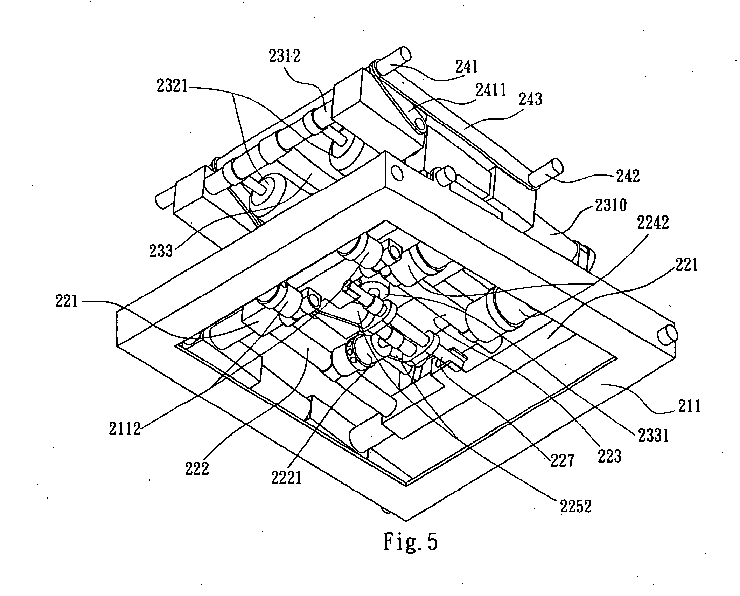

Referring to Figs. 3-5, the safety seat system in accordance with the preferred embodiment of the present invention comprises a displacement tipping device 2 including a first frame unit 21, a second frame unit 22, a third frame unit 23, a fourth frame unit 24, and a fifth frame unit 25.

The first frame unit 21 includes a rectangular hollow base frame 211, a base rod 2111 mounted on a front end of the base frame 211, two pivot rods 212 each mounted on the base frame 211, and two support rods 213 each mounted between the pivot rods 212 and each provided with two slide seats 2130.

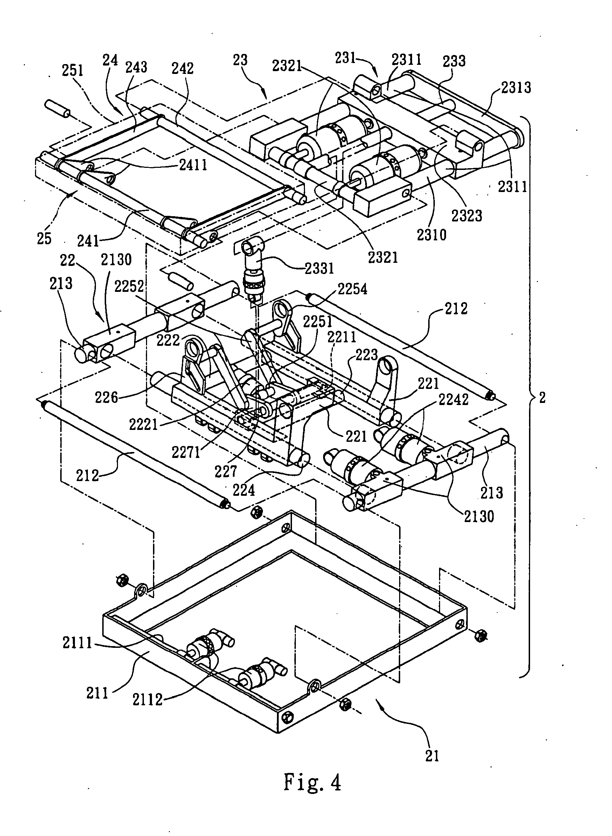

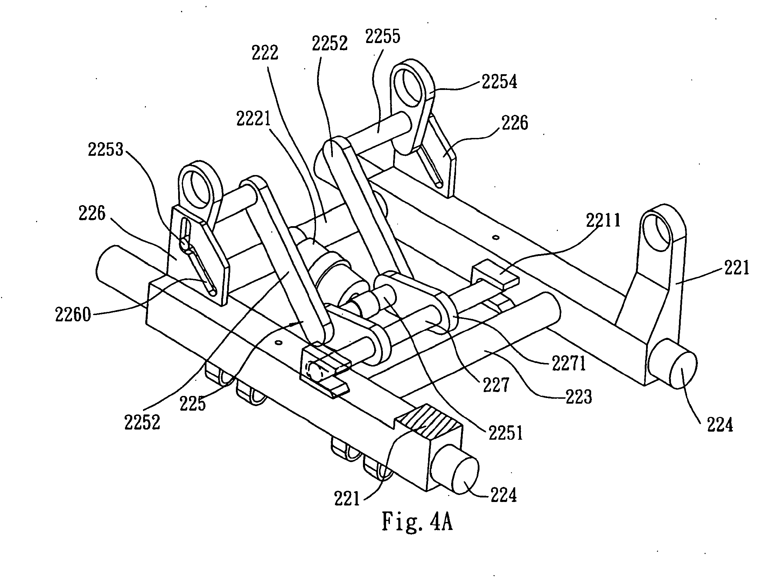

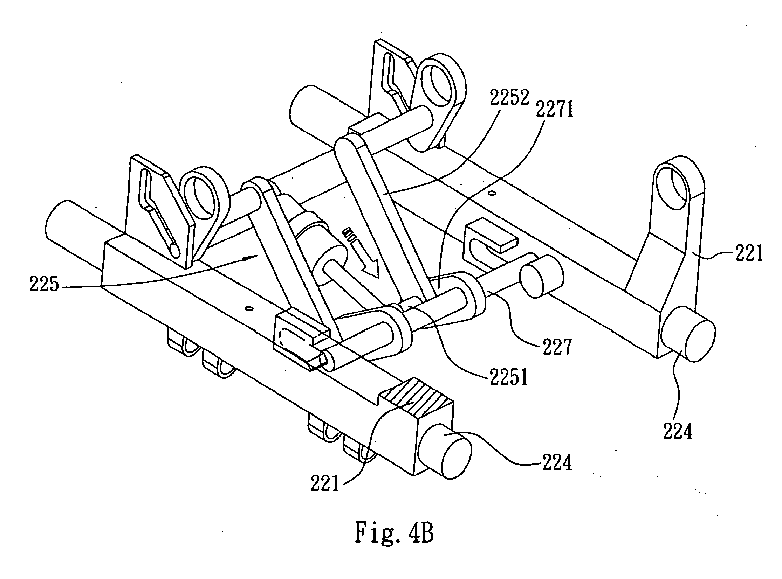

Especially referring to Figs. 4, 4A and 4B, the second frame unit 22 includes two passage rods 224 each mounted between the support rods 213 of the first frame unit 21 and each having two ends each mounted on the respective slide seat 2130 of the respective support rod 213, two support brackets 221 having different shapes and each mounted on the respective passage rod 224, a first connecting rod 222 mounted between first ends of the support brackets 221, a second connecting rod 223 mounted between mediate portions of the support brackets 221, and a linkage 225 mounted between the support brackets 221.

The linkage 225 of the second frame unit 22 includes two guide plates 226 each mounted on the first end of the respective support bracket 221 and each formed with a guide slot 2260, two recessed guide tracks 2211 each mounted on the respective support bracket 221 and each located adjacent to the second connecting rod 223, an operation rod 227 movably mounted between the guide tracks 2211 and limited by the second connecting rod 223, two operation plates 2271 each having a first end mounted on the operation rod 227, a transverse rod 2251 mounted between second ends of the operation plates 2271, two connecting plates 2252 each having a first end mounted on one of two ends of the transverse rod 2251, two connecting rods 2255 each having a first end mounted on a second end of the respective connecting plate 2252, two ears 2254 each movably mounted on the respective guide plate 226 and each having a first side mounted on a second end of the respective connecting rod 2255 and a second side provided with a driven rod 2253 movable in the guide slot 2260 of the respective guide plate 226.

The third frame unit 23 includes a pivot frame 231 having a first linking rod 2310 mounted between second ends of the support brackets 221, a second linking rod 2311 mounted between the ears 2254 of the second frame unit 22, a pivot rod 2312 mounted between first ends of the first linking rod 2310 and the second linking rod 2311, and a connecting plate 2313 mounted between second ends of the first linking rod 2310 and the second linking rod 2311, a slide 232 slidably mounted between the first linking rod 2310 and the second linking rod 2311 of the pivot frame 231, and a guide rod 233 mounted between the pivot rod 2312 and the connecting plate 2313 of the pivot frame 231 and extended through the slide 232.

The fourth frame unit 24 includes a first bar 241 provided with two pairs of pivot plates 2411 connected with the first linking rod 2310 and the second linking rod 2311, a second bar 242 pivotally mounted on the slide 232 of the third frame unit 23, and two connecting plates 243 each mounted between the ,first bar 241 and the second bar 242.

The fifth frame unit 25 includes a fixing frame 251 mounted on the first bar 241 and the second bar 242 of the fourth frame unit 24.

The displacement tipping device 2 further includes two first cylinders 2112 each having a first end mounted on the base rod 2111 of the first frame unit 21 and a second end mounted on one of the support brackets 221 of the second frame unit 22, two second cylinders 2242 each having a first end mounted on the respective slide seat 2130 of the first frame unit 21 and a second end mounted on the second connecting rod 223 of the second frame unit 22, a third cylinder 2221 having a first end mounted on the first connecting rod 222 of the second frame unit 22 and a second end mounted on the transverse rod 2251 of the second frame unit 22, two fourth cylinders 2321 each having a first end mounted on the pivot rod 2312 of the third frame unit 23 and a second end mounted on the slide 232 of the third frame unit 23, and a fifth cylinder 2331 having a first end mounted on the operation rod 227 of the second frame unit 22 and a second end mounted on the guide rod 233 of the third frame unit 23.

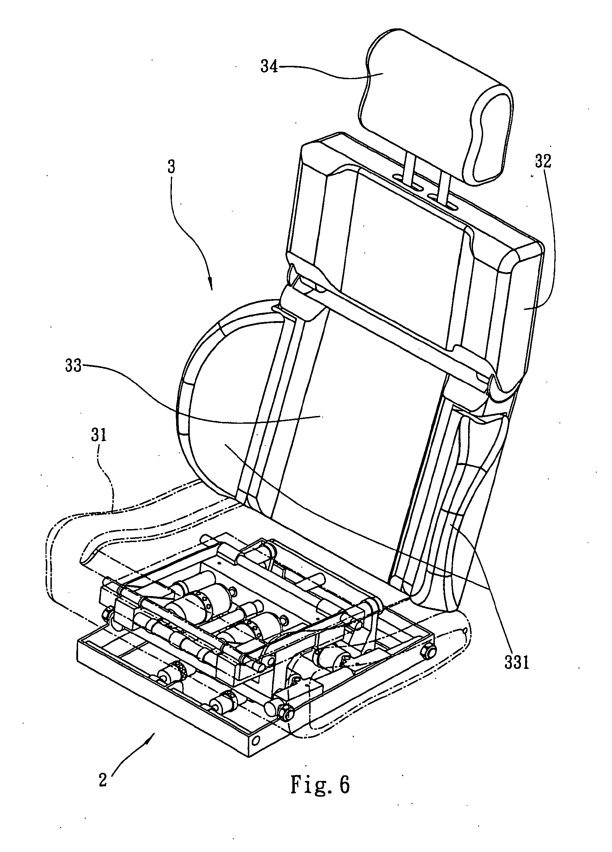

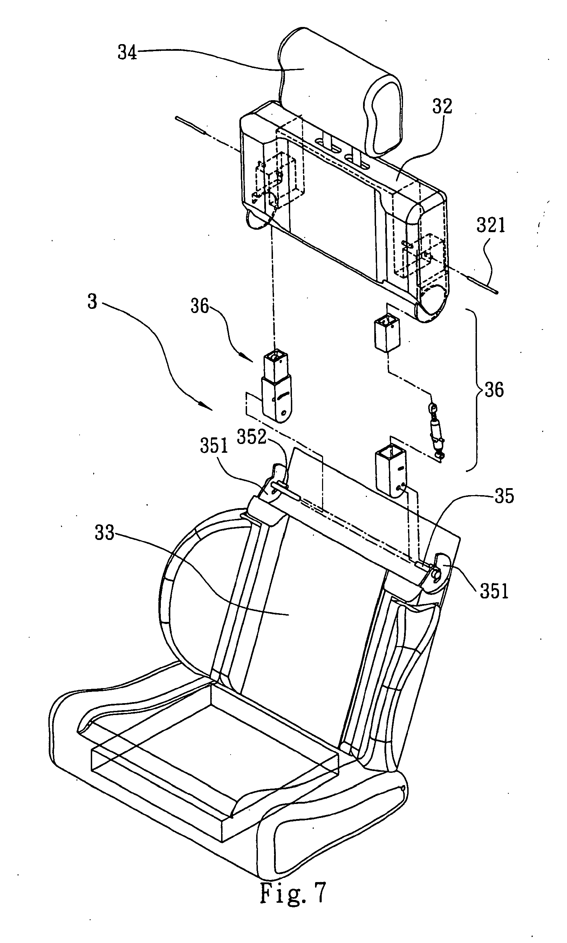

Referring to Figs. 6 and 7, the safety seat system further comprises a seat assembly 3 mounted on a top of the displacement tipping device 2. The seat assembly 3 includes a seat 3 1, a lower backrest 33 mounted on the seat 31, an upper backrest 32 mounted on the lower backrest 33, a headrest 34 mounted on the upper backrest 32, a shaft 35 mounted on a connection of the upper backrest 32 and the lower backrest 33, two drive plates 351 mounted on two ends of the shaft 35 respectively, two stubs 352 each mounted on the respective drive plate 351, two forward inclining cylinder units 36 each connected with the respective stub 352, and two columns 321 each mounted in the upper backrest 32 and each connected with the respective cylinder units 36. Thus, when the cylinder units 36 are expanded outwardly, the upper backrest 32 and the headrest 34 are lifted in a forward inclining manner relative to the lower backrest 33.

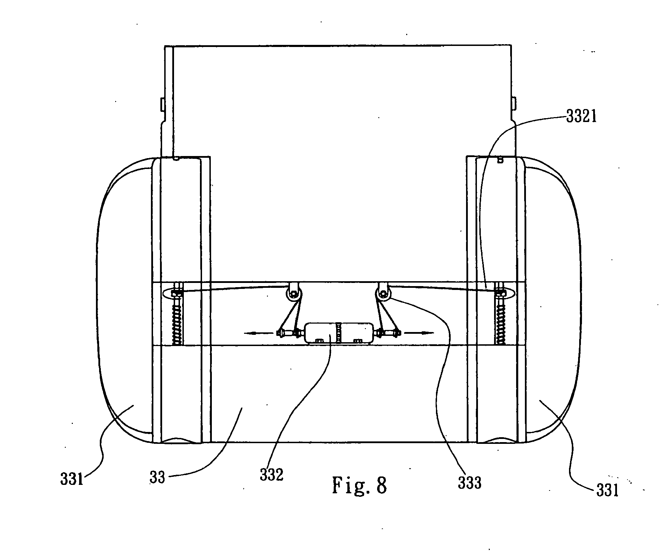

Referring to Figs. 6-8, the seat assembly 3 further includes two protective wings 331 mounted on two sides of the lower backrest 33 respectively, two pivot shafts 333 mounted in the lower backrest 33, a lower backrest cylinder 332 mounted in the lower backrest 33, and two connecting wires 3321 each mounted around the respective pivot shaft 333 and each having a first end connected to the lower backrest cylinder 332 and a second end connected to the respective protective wing 331. Thus, when the lower backrest cylinder 332 is expanded outwardly, the protective wings 331 are moved toward each other by the connecting wires 3321.

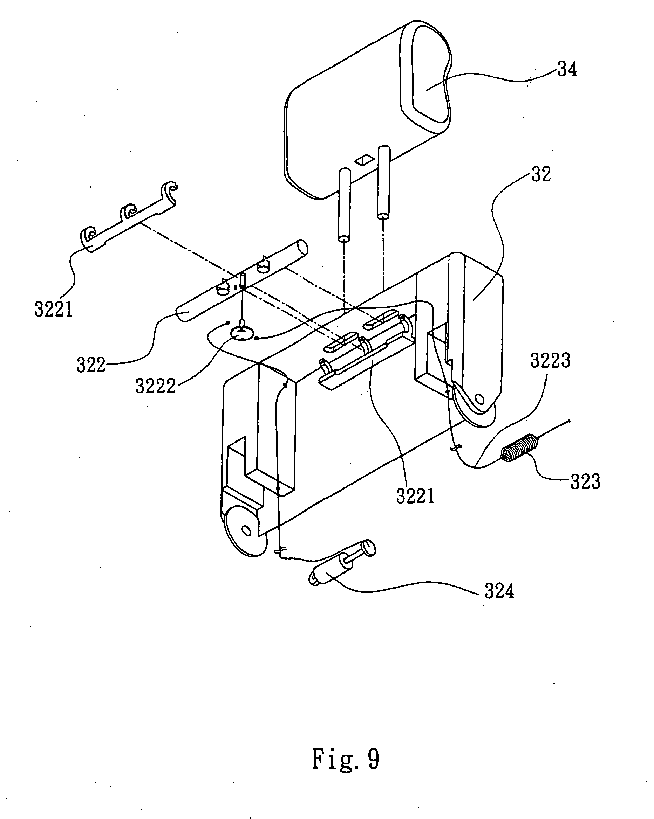

Referring to Fig. 9, the seat assembly 3 further includes a fixing bar 322 rotatably mounted in the upper backrest 32 and secured to the headrest 34 to rotate the headrest 34, two covers 3221 mounted in the upper backrest 32 to 20 cover the fixing bar 322, a drive disk 3222 secured to the fixing bar 322 to rotate the fixing bar 322, two wires 3223 each having a first end connected to the drive disk 3222, a headrest cylinder 324 mounted in the upper backrest 32 and connected to a second end of one of the wires 3223, and an elastic member 323 mounted in the upper backrest 32 and connected to a second end of the other one of the wires 3223. Thus, when the headrest cylinder 324 is operated and expanded, the drive disk 3222 is rotated by one of the wires 3223 to rotate the fixing bar 322 so as to rotate the headrest 34.

In the preferred embodiment of the present invention, the first cylinders 2112, the second cylinders 2242, the third cylinder 2221, the fourth cylinders 2321, the fifth cylinder 2331, the cylinder units 36 and the lower backrest cylinder 332 are double directional hydraulic cylinders.

Referring to Figs. 1-9, the first cylinders 2112 is connected to the cylinders 11 at the front portion, two sides of the front portion, the rear portion and two sides of the rear portion of the car body 1, the second cylinders 2242 is connected to the cylinders 11 at the left side and the right side of the car body 1, the third cylinder 2221 is connected to the cylinders 11 at two sides of the front portion, two sides of the rear portion, the left side and the right side of the car body 1, the fourth cylinders 2321 is connected to the cylinders 11 at the front portion and two sides of the front portion of the car body 1, the fifth cylinder 2331 is connected to the cylinders 11 at the left side and the right side of the car body 1, the lower backrest cylinder 332 is connected to the cylinders 11 at the front portion, two sides of the front portion, the left side and the right side of the car body 1, the cylinder units 36 is connected to the rear portion and two sides of the rear portion of the car body 1, and the headrest cylinder 324 is connected to two sides of the rear portion of the car body 1.

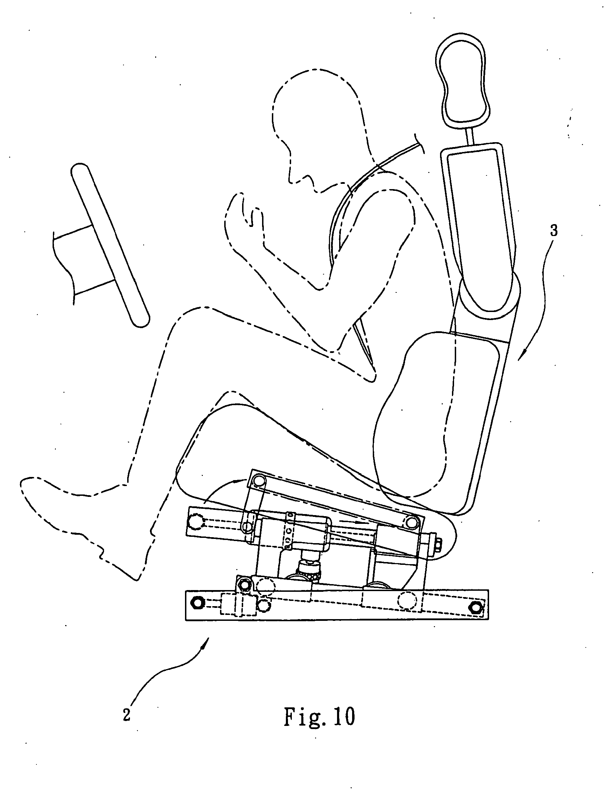

As shown in Fig. 10, when the car body 1 is subjected to an external hitting force in multiple directions, the displacement tipping device 2 and the seat assembly 3 are operated to provide a reaction to eliminate or reduce the external hitting force.

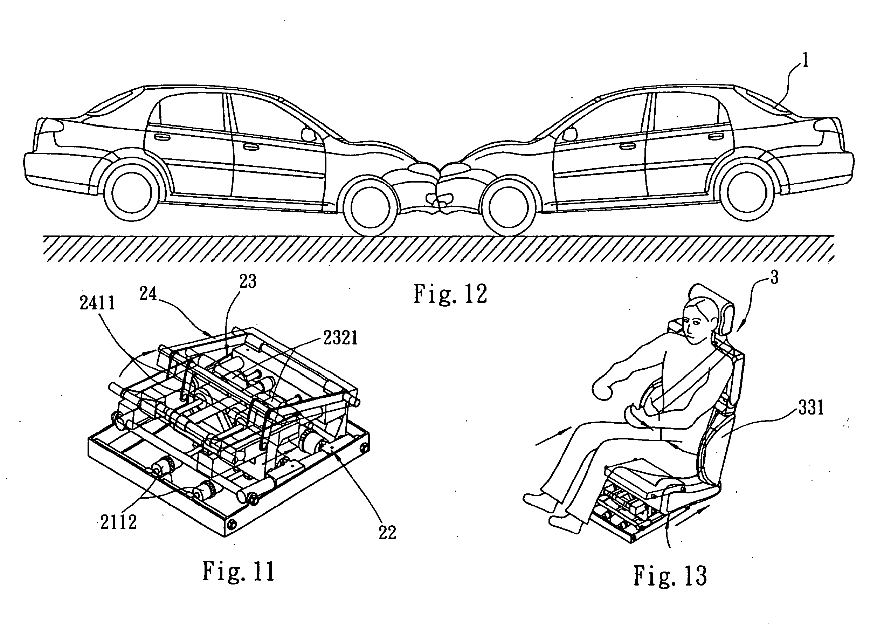

Referring to Figs. 11-13 with reference to Figs. 1-5, when the front portions of two cars collide, the hydraulic oil contained in the cylinders 11 at the front portion of the car body 1 is filled into the first cylinders 2112, the fourth cylinders 2321 and the lower backrest cylinder 332.

At this time, each of the first cylinders 2112 is mounted between the base rod 2111 of the first frame unit 21 and one of the support brackets 221 of the second frame unit 22, so that when the first cylinders 2112 are operated and expanded by the hydraulic oil, the second frame unit 22 is pushed by the first cylinders 2112 to move rearward so as to move the seat assembly 3 rearward, such that the driver's body is moved rearward quickly to prevent the driver's body from being hit.

At the same time, each of the fourth cylinders 2321 is mounted between the pivot rod 2312 of the third frame unit 23 and the slide 232 of the third frame unit 23, so that when the fourth cylinders 2321 are operated and expanded by the hydraulic oil, the slide 232 of the thirdframe unit 23 is pushed by the fourth cylinders 2321 to move toward the connecting plate 2313 of the third frame unit 23 to push the fourth frame unit 24 which pushes the pivot plates 2411 to pivot upward relative to the third frame unit 23 to raise the fourth frame unit 24 so as to raise the seat assembly 3 in an inclined manner, such that the driver's legs are lifted to a determined angle to protect the driver's legs.

At the same time, when the lower backrest cylinder 332 is operated and expanded by the hydraulic oil, the protective wings 331 are moved toward each other by the connecting wires 3321 to clamp and protect the driver's waist.

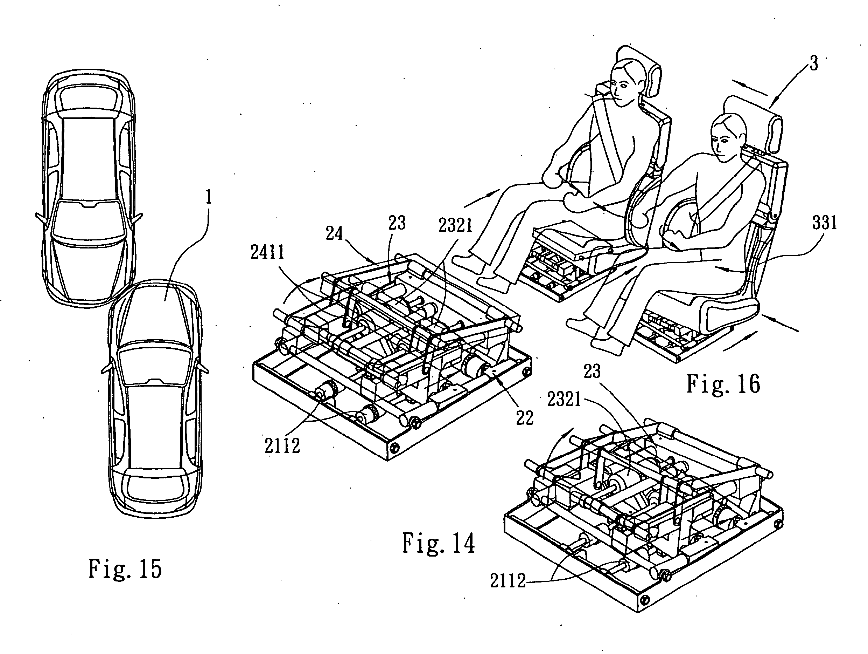

Referring to Figs. 14-16 with reference to Figs. 1-5, when one of the two sides of the front portion of the car is hit, the hydraulic oil contained in the cylinders 11 at the two sides of the front portion of the car body 1 is filled into the first cylinders 2112, the third cylinder 2221, the fourth cylinders 2321 and the lower backrest cylinder 332.

At this time, each of the first cylinders 2112 is mounted between the base rod 2111 of the first frame unit 21 and one of the support brackets 221 of the second frame unit 22, so that when the first cylinders. 2112 are operated and expanded by the hydraulic oil, the second frame unit 22 is pushed by the first cylinders 2112 to move rearward so as to move the seat assembly 3 rearward, such that the driver's body is moved rearward quickly,to prevent the driver's body from being hit.

At the same time, the third cylinder 2221 is mounted between the first connecting rod 222 of the second frame unit 22 and the transverse rod 2251 of the second frame unit 22, so that when the third cylinder 2221 is operated and expanded by the hydraulic oil, the linkage 225 of the second frame unit 22 is pushed by the third cylinder 2221 to move toward the second connecting rod 223. Thus, when the linkage 225 is moved toward the second connecting rod 223, each of the ears 2254 of the second frame unit 22 is movable downward on the respective guide plate 226 in an inclined manner to move the second linking rod 2311 of the third frame unit 23 downward relative to the first linking rod 2310 of the third frame unit 23, so that the third frame unit 23 is inclined sideward toward the central portion of the car body 1, and the seat assembly 3 is inclined sideward toward the central portion of the car body 1 to protect the driver's body.

At the same time, each of the fourth cylinders 2321 is mounted between the pivot rod 2312 of the third frame unit 23 and the slide 232 of the third frame unit 23, so that when the fourth cylinders 2321 are operated and expanded by the hydraulic oil, the slide 232 of the third frame unit 23 is pushed by the fourth cylinders 2321 to move toward the connecting plate 2313 of the third frame unit 23 to push the fourth frame unit 24 which pushes the pivot plates 2411 to pivot upward relative to the third frame unit 23 to raise the fourth frame unit 24 so as to raise the seat assembly 3 in an inclined manner, such that the driver's legs are lifted to a determined angle to protect the driver's legs.

At the same time, when the lower backrest cylinder 332 is operated and expanded by the hydraulic oil, the protective wings 331 are moved toward each other by the connecting wires 3321 to clamp and protect the driver's waist.

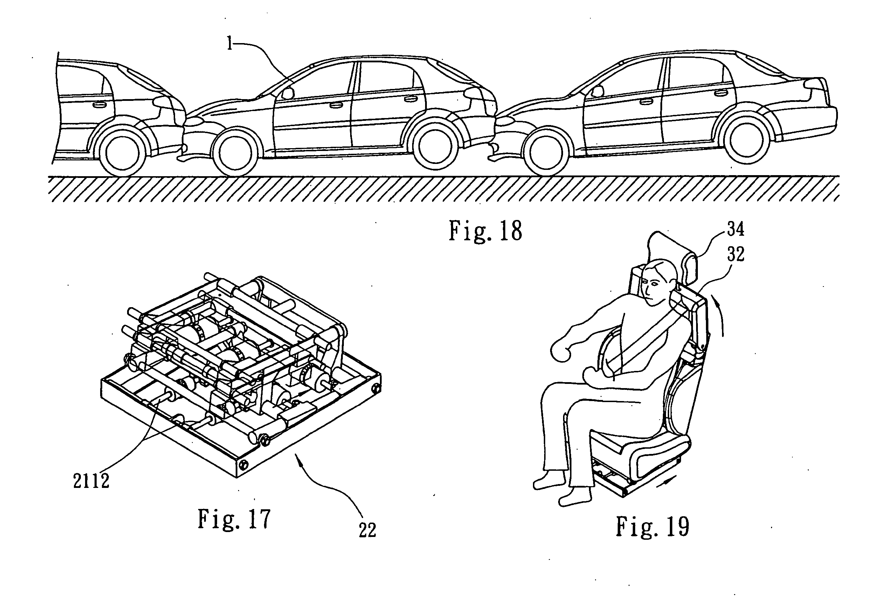

Referring to Figs. 17-19 with reference to Figs. 1-5, when the rear portions of two cars collide, the hydraulic oil contained in the cylinders 11 at the rear portion of the car body 1 is filled into the first cylinders 2112 and the cylinder units 36.

At this time, each of the first cylinders 2112 is mounted between the base rod 2111 of the first frame unit 21 and one of the support brackets 221 of the second frame unit 22, so that when the first cylinders 2112 are operated and expanded by the hydraulic oil, the second frame unit 22 is pushed by the first cylinders 2112 to move rearward so as to move the seat assembly 3 rearward, such that the driver's body is moved rearward quickly to prevent the driver's body from being hit.

At the same time, when the cylinder units 36 are expanded outwardly, the upper backrest 32 and the headrest 34 are lifted in a forward inclining manner relative to the lower backrest 33 to protect the driver's head and neck.

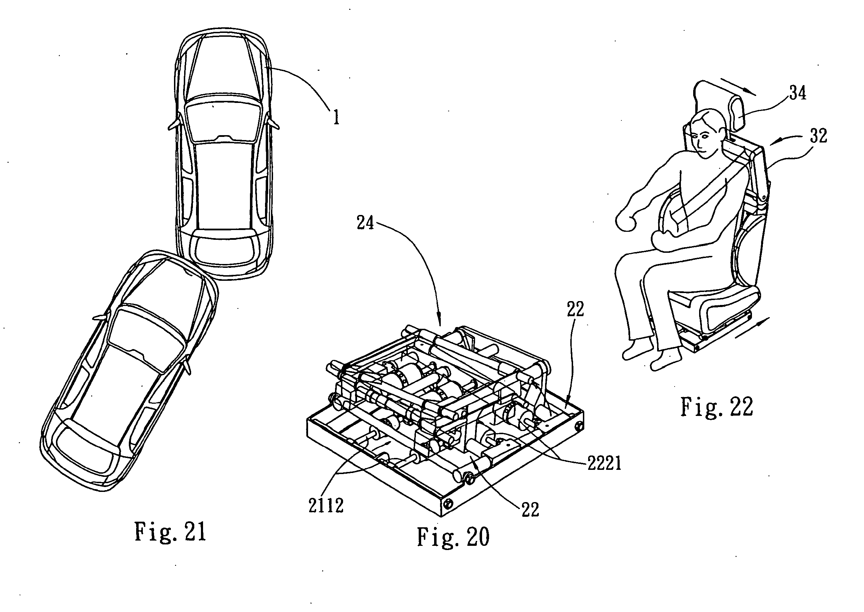

Referring to Figs. 20-22 with reference to Figs. 1-5, when one of the two sides of the rear portion of the car is hit, the hydraulic oil contained in the cylinders 11 at the two sides of the rear portion of the car body 1 is filled into the first cylinders 2112, the third cylinder 2221, the cylinder units 36 and the headrest cylinder 324.

At this time, each of the first cylinders 2112 is mounted between the base rod 2111 of the first frame unit 21 and one of the support brackets 221 of the second frame unit 22, so that when the first cylinders 2112 are operated and expanded by the hydraulic oil, the second frame unit 22 is pushed by the first cylinders 2112 to move rearward so as to move the seat assembly 3 rearward, such that the driver's body is moved rearward quickly to prevent the driver's body from being hit.

At the same time, the third cylinder 2221 is mounted between the first connecting rod 222 of the second frame unit 22 and the transverse rod 2251 of the second frame unit 22, so that when the third cylinder 2221 is operated and expanded by the hydraulic oil, the linkage 225 of the second frame unit 22 is pushed by the third cylinder 2221 to move toward the second connecting rod 223. Thus, when the linkage 225 is moved toward the second connecting rod 223, each of the ears 2254 of the second frame unit 22 is movable downward on the respective guide plate 226 in an inclined manner to move the second linking rod 2311 of the third frame unit 23 downward relative to the first linking rod 2310 of the third frame unit 23, so that the third frame unit 23 is inclined sideward toward the central portion of the car body 1, and the seat assembly 3 is inclined sideward toward the central portion of the car body 1 to protect the driver's body.

At the same time, when the cylinder units 36 are expanded outwardly, the upper backrest 32 and the headrest 34 are lifted in a forward inclining manner relative to the lower backrest 33 to protect the driver's head and neck.

At the same time, when the headrest cylinder 324 is operated and expanded, the drive disk 3222 is rotated by one of the wires 3223 to rotate the fixing bar 322 to rotate the headrest 34 so as to protect the driver's head.

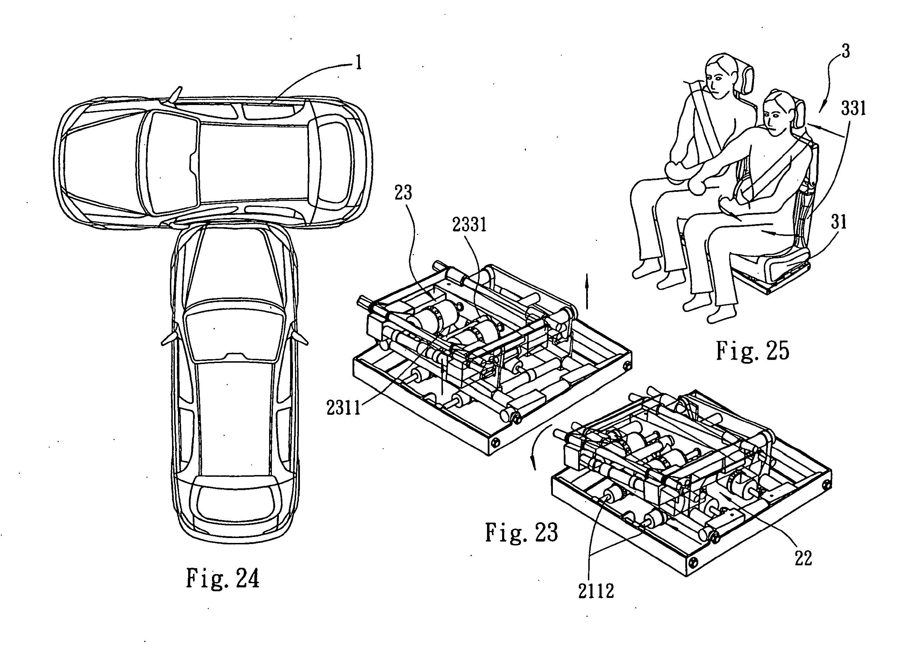

Referring to Figs. 23-25 with reference to Figs. 1-5, when the left side or the right side of the car body 1 is hit, the hydraulic oil contained in the cylinders 11 at the left side and the right side of the car body 1 is filled into the second cylinders 2242, the third cylinder 2221, the fifth cylinder 2331 and the lower backrest cylinder 332.

At this time, each of the second cylinders 2242 is mounted between the respective slide seat 2130 of the first frame unit 21 and the second connecting rod 223 of the second frame unit 22, so that when the second cylinders 2242 are operated and expanded by the hydraulic oil, the second frame unit 22 is pushed by the second cylinders 2242 to move toward the central portion of the car body 1 quickly to prevent the driver's body from being hit.

At the same time, the third cylinder 2221 is mounted between the first connecting rod 222 of the second frame unit 22 and the transverse rod 2251 of the second frame unit 22, so that when the third cylinder 2221 is operated and expanded by the hydraulic oil, the linkage 225 of the second frame unit 22 is pushed by the third cylinder 2221 to move toward the second connecting rod 223. Thus, when the linkage 225 is moved toward the second connecting rod 223, each of the ears 2254 of the second frame unit 22 is movable downward on the respective guide plate 226 in an inclined manner to move the second linking rod 2311 of the third frame unit 23 downward relative to the first linking rod 2310 of the third frame unit 23, so that the third frame unit 23 is inclined sideward toward the central portion of the car body 1, and the seat assembly 3 is inclined sideward toward the central portion of the car body 1 to protect the driver's body.

At the same time, the fifth cylinder 2331 is mounted between the operation rod 227 of the second frame unit 22 and the guide rod 233 of the third frame unit 23, so that when the fifth cylinder 2331 is operated and expanded by the hydraulic oil, the second linking rod 2311 of the third frame unit 23 is pushed by the fifth cylinder 2331 to drive the ears 2254 of the second frame unit 22 to move upward on the guide plates 226. Thus, the seat assembly 3 produces a smaller inclined angle along the hitting direction, so that the driver's body produces a reaction to eliminate or reduce the sideward hitting force to protect the driver's body.

At the same time, when the lower backrest cylinder 332 is operated and expanded by the hydraulic oil, the protective wings 331 are moved toward each other by the connecting wires 3321 to clamp and protect the driver's waist.

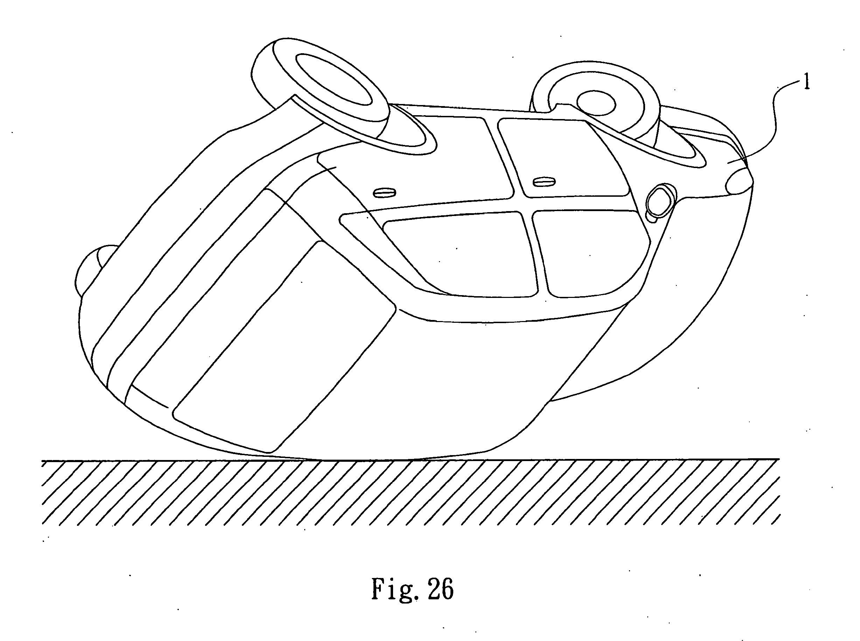

As shown in Fig. 26, when the car body 1 is rolling on the ground, the seat assembly 3 is inclined sideward toward the central portion of the car body 5 to protect the driver's body.

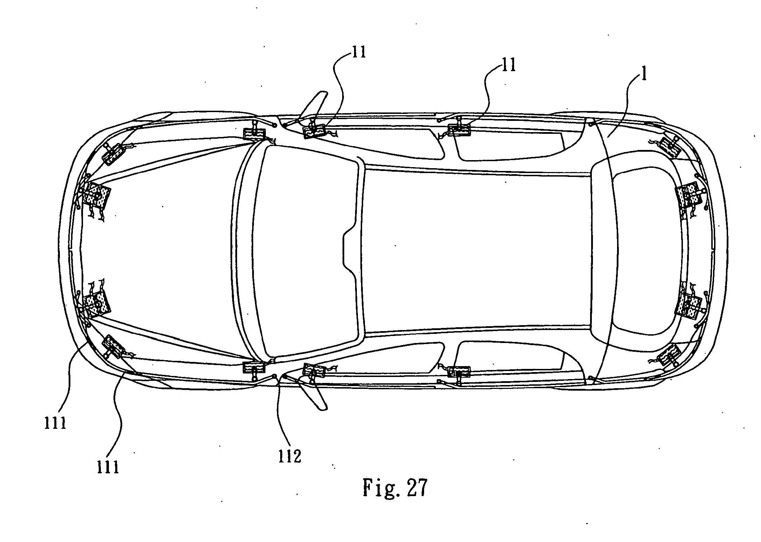

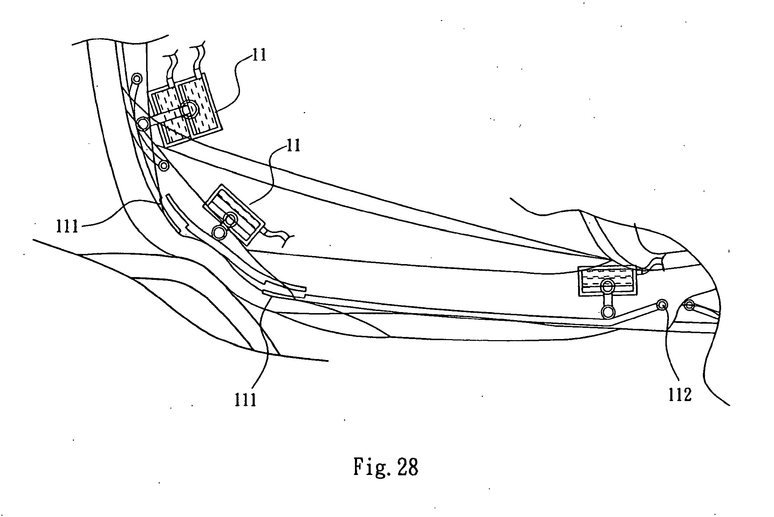

As shown in Figs. 27 and 28, each of the cylinders 11 of the car body 1 is provided with a lever-type drive plate 111 having a distal end provided with a fulcrum 112. The drive plates 111 of the cylinders 11 are arranged in an overlapping manner or in a staggered manner. Thus, when the front drive plate 111 is pressed, the front drive plate 111 pushes the rear drive plate 111 to push the two cylinders 11 together so as to operate the displacement tipping device 2 quickly.

Accordingly, the car body 1 has a periphery provided with a plurality of lever-type hydraulic cylinders 11, and the safety seat system comprises a displacement tipping device 2 and a seat assembly 3 connected to the cylinders 11, so that when the car body 1 is subjected to a hit or collision in any direction, the displacement tipping device 2 produces a relative reaction to eliminate or reduce the hitting force and also drives the seat assembly 3 to move toward the central portion of the car body 1 quickly to prevent the driver's body from being hit directly so as to protect the driver's body. In addition, when the lower backrest cylinder 332 is operated and expanded due to the hit, the protective wings 331 are moved toward each other to clamp and protect the driver's waist.

Further, when the cylinder units 36 are operated and expanded due to the hit, the upper backrest 32 and the headrest 34 are lifted in a forward inclining manner relative to the lower backrest 33 to protect the driver's head and neck. Further, when the headrest cylinder 324 is operated and expanded due to the hit, the drive disk 3222 is rotated by one of the wires 3223 to rotate the fixing bar 322 to rotate the headrest 34 so as to protect the driver's head.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A car, comprising:
a car body (1) having a periphery provided with a plurality of cylinders (11); a safety seat system mounted in the car body (1) and connected to each of the cylinders (11);
the safety seat system comprising a displacement tipping device (2) including:
a first frame unit (21) including a hollow base frame (211), a base rod (2111) mounted on a front end of the base frame (211), two pivot rods (212) each mounted on the base frame (211), and two support rods (213) each mounted between the pivot rods (212) and each provided with two slide seats (2130);
a second frame unit (22) including two passage rods (224) each mounted between the support rods (213) of the first frame unit (21) and each having two ends each mounted on the respective slide seat (2130) of the respective support rod (213), two support brackets (221) each mounted on the respective passage rod (224), a first connecting rod (222) mounted between first ends of the support brackets (221), a second connecting rod (223) mounted between mediate portions of the support brackets (221), and a linkage (225) mounted between the support brackets (221);
a third frame unit (23) including a pivot frame (231) having a first linking rod (2310) mounted between second ends of the support brackets (221), a second linking rod (2311) mounted on the linkage of the second frame unit (22), a pivot rod (2312) mounted between first ends of the first linking rod (2310) and the second linking rod (2311), and a connecting plate (2313) mounted between second ends of the first linking rod (2310) and the second linking rod (2311), a slide (232) slidably mounted between the first linking rod (2310) and the second linking rod (2311) of the pivot frame (231), and a guide rod (233) mounted between the pivot rod (2312) and the connecting plate (2313) of the pivot frame (231) and extended through the slide (232);
a fourth frame unit (24) including a first bar (241) provided with two pairs of pivot plates (2411) connected with the first linking rod (2310) and the second linking rod (2311), a second bar (242) pivotally mounted on the slide (232) of the third frame unit (23), and two connecting plates (243) each mounted between the first bar (241) and the second bar (242);
a fifth frame unit (25) including a fixing frame (251) mounted on the first bar (241) and the second bar (242) of the fourth frame unit (24);
two first cylinders (2112) each having a first end mounted on the base rod (2111) of the first frame unit (21) and a second end mounted on one of the support brackets (221) of the second frame unit (22);
two second cylinders (2242) each having a first end mounted on the respective slide seat (2130) of the first frame unit (21) and a second end mounted on the second connecting rod (223) of the second frame unit (22);
a third cylinder (2221) having a first end mounted on the first connecting rod (222) of the second frame unit (22) and a second end mounted on the linkage of the second frame unit (22);
two fourth cylinders (2321) each having a first end mounted on the pivot rod (2312) of the third frame unit (23) and a second end mounted on the slide (232) of the third frame unit (23);
a fifth cylinder (2331) having a first end mounted on the linkage of the second frame unit (22) and a second end mounted on the guide rod (233) of the third frame unit (23).

2. The car in accordance with claim 1, wherein the linkage of the second frame unit (22) includes two guide plates (226) each mounted on the first end of the respective support bracket (221) and each formed with a guide slot (2260), two recessed guide tracks (2211) each mounted on the respective support bracket (221) and each located adjacent to the second connecting rod (223), an operation rod (227) movably mounted between the guide tracks (2211) and limited by the second connecting rod (223), two operation plates (2271) each having a first end mounted on the operation rod (227), a transverse rod (2251) mounted between second ends of the operation plates (2271), two connecting plates (2252) each having a first end mounted on one of two ends of the transverse rod (2251), two connecting rods (2255) each having a first end mounted on a second end of the respective connecting plate (2252), two ears (2254) each movably mounted on the respective guide plate (226) and each having a first side mounted on a second end of the respective connecting rod (2255) and a second side provided with a driven rod (2253) movable in the guide slot (2260) of the respective guide plate (226).

3. The car in accordance with claim 2, wherein the second end of the third cylinder (23) is mounted on the transverse rod of the second frame unit (22), the first end of the fifth cylinder (25) is mounted on the operation rod (227) of the second frame unit (22), and the second linking rod (2311) of the third frame unit (23) is mounted between the ears of the second frame unit (22).

4. The car in accordance with claim 1, wherein the safety seat system further comprises a seat assembly (3) mounted on a top of the displacement tipping device (2) and including a seat (31), a lower backrest (33) mounted on the seat (31), an upper backrest (32) mounted on the lower backrest (33), and a headrest (34) mounted on the upper backrest (33).

5. The car in accordance with claim 4, wherein the seat assembly (3) further includes a shaft (35) mounted on a connection of the upper backrest (32) and the lower backrest (33), two drive plates (351) mounted on two ends of the shaft (35) respectively, two stubs (352) each mounted on the respective drive plate (351), two forward inclining cylinder units (36) each connected with the respective stub (352), and two columns (321) each mounted in the upper backrest (32) and each connected with the respective cylinder units (36) so that when the cylinder units (36) are expanded outwardly, the upper backrest (32) and the headrest (34) are lifted in a forward inclining manner relative to the lower backrest (33).

6. The car in accordance with claim 4, wherein the seat assembly further includes two protective wings (331) mounted on two sides of the lower backrest (33) respectively, two pivot shafts (333) mounted in the lower backrest (33), a lower backrest cylinder (332) mounted in the lower backrest (33), and two connecting wires (3321) each mounted around the respective pivot shaft (333) and each having a first end connected to the lower backrest cylinder (332) and a second end connected to the respective protective wing (331), so that when the lower backrest cylinder (332) is expanded outwardly, the protective wings (331) are moved toward each other by the connecting wires (3321).

7. The car in accordance with claim 4, wherein the seat assembly (3) further includes a fixing bar (322) rotatably mounted in the upper backrest (32) and secured to the headrest (34) to rotate the headrest (34), two covers (3221) mounted in the upper backrest (32) to cover the fixing bar (322), a drive disk (3222) secured to the fixing bar (322) to rotate the fixing bar (322), two wires (3223) each having a first end connected to the drive disk (3222), a headrest cylinder (324) mounted in the upper backrest (32) and connected to a second end of one of the wires (3223), and an elastic member (323) mounted in the upper backrest (32) and connected to a second end of the other one of the wires (3223), so that when the headrest cylinder (324) is operated and expanded, the drive disk (3222) is rotated by one of the wires (3223) to rotate the fixing bar (322) so as to rotate the headrest (34).

8. The car in accordance with claim 5 or 6, wherein the first cylinders (2112), the second cylinders (2242), the third cylinder (2221), the fourth cylinders (2321), the fifth cylinder (2331), the cylinder units (36) and the lower backrest cylinder (332) are double directional hydraulic cylinders.

9. The car in accordance with claim 1, each of the cylinders of the car body is provided with a lever-type drive plate (111) having a distal end provided with a fulcrum (112).

10. The car in accordance with claim 5, 6 or 7, wherein the first cylinders (2112) is connected to the cylinders (11) at the front portion, two sides of the front portion, the rear portion and two sides of the rear portion of the car body (1), the second cylinders (2242) is connected to the cylinders (11) at the left side and the right side of the car body (1), the third cylinder (2221) is connected to the cylinders (11) at two sides of the front portion, two sides of the rear portion, the left side and the right side of the car body (1), the fourth cylinders (2321) is connected to the cylinders (11) at the front portion and two sides of the front portion of the car body (1), the fifth cylinder (2331) is connected to the cylinders (11) at the left side and the right side of the car body (1), the lower backrest cylinder (332) is connected to the cylinders (11) at the front portion, two sides of the front portion, the left side and the right side of the car body (1), the cylinder units (36) is connected to the rear portion and two sides of the rear portion of the car body (1), and the headrest cylinder (324) is connected to two sides of the rear portion of the car body (1).

## Patentansprüche

1. Ein Auto mit:
einer Fahrzeugkarosserie, deren Außenseite mit einer Vielzahl von Zylindern (11) ausgestattet ist, wobei eine Sicherheitssitzvorrichtung in der Fahrzeugkarosserie (1) montiert und mit jedem der Zylinder verbunden ist;
wobei die Sicherheitssitzvorrichtung ein Ablöseverkippungsgerät (2) enthält mit:
einer ersten Rahmeneinheit (21) mit einem hohlen Basisrahmen (211), einem Basisstab (2111), der am vorderen Ende des Basisrahmens (211) montiert ist, zwei Achsstangen (212), wobei jede am Basisrahmen (211) montiert ist und zwei Stützstangen (213), wobei jede zwischen den Achsstangen (212) montiert ist und wobei jede mit zwei Schiebesitzen (2130) ausgestattet ist;
einer zweiten Rahmeneinheit (22) mit zwei Durchgangsstangen (224), wobei jede zwischen den Stützstangen (213) der ersten Rahmeneinheit (21) montiert ist und jede mit zwei Enden, von denen jedes am entsprechenden Schiebesitz (2130) der jeweiligen Stützstange (213) montiert ist, zwei Befestigungsbügeln (221), die jeweils an der entsprechenden Stützstange (224) montiert sind, einer ersten Verbindungsstange (222), die zwischen den ersten Enden der Befestigungsbügel (221) montiert ist, einer zweiten Verbindungsstange (223), die zwischen den Mittelteilen der Befestigungsbügel (221) montiert ist, und einem Gestänge (225), das zwischen den Befestigungsbügeln (221) montiert ist;
einer dritten Rahmeneinheit (23) mit einem Achsrahmen (231), der eine erste Verbindungsstange (2310), die zwischen den zweiten Enden der Befestigungsbügel (221) montiert ist, eine zweite Verbindungsstange (2311), die auf dem Gestänge der zweiten Rahmeneinheit (22) montiert ist, eine Achsstange (2312), die zwischen den ersten Enden der ersten Verbindungsstange (2310) und der zweiten Verbindungsstange (2311) montiert ist, und eine Verbindungsplatte (2313), die zwischen den zweiten Enden der ersten Verbindungsstange (2310) und der zweiten Verbindungsstange (2311) montiert ist, enthält, einem Gleitstück (232), das gleitbar zwischen der ersten Verbindungsstange (2310) und der zweiten Verbindungsstange (2311) des Achsrahmens (231) montiert ist, und einer Führungsstange (233), die zwischen der Achsstange (2312) und der Verbindungsplatte (2313) des Achsrahmens (231) montiert ist und durch das Gleitstück (232) herausragt;
einer vierten Rahmeneinheit (24) mit einem ersten Balken (241), der mit zwei paar Achsplatten (2411) ausgestattet ist, die mit der ersten Verbindungsstange (2310) und der zweiten Verbindungsstange (2311) verbunden sind, einem zweiten Balken (242), der drehbar an dem Gleitstück (232) der dritten Rahmeneinheit (23) montiert ist und zwei Verbindungsplatten (243), wobei jede zwischen dem ersten Balken (241) und dem zweiten Balken (242) montiert ist;
einer fünften Rahmeneinheit (25) mit einem Befestigungsrahmen (251), der an dem ersten Balken (241) und dem zweiten Balken (242) der vierten Rahmeneinheit (24) montiert ist;
zwei ersten Zylindern (2112), deren erstes Ende an dem Basisstab (2111) der ersten Rahmeneinheit (21) und deren zweites Ende an einem der Befestigungsbügel (221) der zweiten Rahmeneinheit (22) montiert ist;
zwei zweiten Zylindern (2242), deren erstes Ende am entsprechenden Schiebesitz (2130) der ersten Rahmeneinheit (21) und deren zweites Ende an der zweiten Verbindungsstange (223) der zweiten Rahmeneinheit (22) montiert ist;
einem dritten Zylinder (2221), dessen erstes Ende an der ersten Verbindungsstange (222) der zweiten Rahmeneinheit (22) und dessen zweites Ende am Gestänge der zweiten Rahmeneinheit (22) montiert ist;
zwei vierte Zylinder (2321) deren erstes Ende an der Achsstange (2312) der dritten Rahmeneinheit (23) und deren zweites Ende auf dem Gleitstück (232) der dritten Rahmeneinheit (23) montiert ist;
einem fünften Zylinder (2331), dessen erstes Ende am Gestänge der zweiten Rahmeneinheit (22) und dessen zweites Ende an der Führungsstange (233) der dritten Rahmeneinheit (23) montiert ist.

2. Auto gemäß Anspruch 1, **dadurch gekennzeichnet, dass** das Gestänge der zweiten Rahmeneinheit (22) zwei Führungsplatten (226), von denen jede am ersten Ende des entsprechenden Befestigungsbügels montiert ist, wobei jede mit einem Führungsschlitz (2260) ausgestattet ist, zwei ausgesparte Führungsbahnen (2211), von denen jede auf dem entsprechenden Befestigungsbügel (2211) montiert ist und von denen jede angrenzend an die zweite Verbindungsstange (223) angeordnet ist, eine Betriebsstange (227), die beweglich zwischen den Führungsbahnen (2211) montiert ist und durch die zweite Verbindungsstange (223) begrenzt wird, zwei Betriebsplatten (2271), von denen jede am ersten Ende an der Betriebsstange (227) montiert ist, eine Querstange (2251), die zwischen den zweiten Enden der Betriebsplatten (2271) montiert ist, zwei Verbindungsplatten (2252), von denen jede am ersten Ende an einem der beiden Enden der Querstange (2251) montiert ist, zwei Verbindungsstangen (2255), von denen jede am ersten Ende an einem zweiten Ende der entsprechenden Verbindungsplatte (2252) montiert ist, zwei Ösen (2254), von denen jede beweglich an der entsprechenden Führungsplatte (226) montiert ist, wobei jede an ihrer ersten Seite an einem zweiten Ende der entsprechenden Verbindungsstange (2255) montiert ist und ihre zweite Seite mit einer im Führungsschlitz (2260) der entsprechenden Führungsplatte (226) beweglichen Antriebsstange (2253) ausgestattet ist, enthält.

3. Auto gemäß Anspruch 2, **dadurch gekennzeichnet, dass** das zweite Ende des dritten Zylinders (23) auf der Querstange der zweiten Rahmeneinheit (22), das erste Ende des fünften Zylinders (25) auf der Betriebsstange (227) der zweiten Rahmeneinheit (22), und die zweite Verbindungsstange (2311) der dritten Rahmeneinheit (23) zwischen den Ösen der zweiten Rahmeneinheit (22) montiert ist.

4. Auto gemäß Anspruch 1, **dadurch gekennzeichnet, dass** die Sicherheitssitzvorrichtung weiter eine Sitzanordnung (3) enthält, die oben auf dem Ablöseverkippungsgerät (2) montiert ist, und einen Sitz (31), eine untere Rückenlehne (33), die am Sitz (31) montiert ist, eine obere Rückenlehne (32), die auf der unteren Rückenlehne (33) montiert ist, und eine Kopfstütze (34), die auf der oberen Rückenlehne (33) montiert ist, umfasst.

5. Auto gemäß Anspruch 4, **dadurch gekennzeichnet, dass** die Sitzanordnung (3) weiter eine Achse (35), die auf einer Verbindung der oberen Rückenlehne (32) und der unteren Rückenlehne (32) montiert ist, zwei Mitnehmerscheiben (351), die jeweils an beiden Enden der Achse (35) montiert sind, zwei Halterungen (352), die jeweils an der entsprechenden Mitnehmerscheibe (351) montiert sind, zwei vorwärts geneigte Zylindereinheiten (36), die jeweils mit der entsprechenden Halterung (352) verbunden sind, und zwei Stützen (321), die jeweils in der oberen Rückenlehne (32) montiert sind und jede mit den entsprechenden Zylindereinheiten (36) verbunden ist, so dass, wenn die Zylindereinheiten (36) nach außen ausgedehnt werden, die obere Rückenlehne (32) and die Kopfstütze (34) in einer vorwärts geneigten Weise relativ zur unteren Rückenlehne angehoben werden, enthält.

6. Auto gemäß Anspruch 4, **dadurch gekennzeichnet, dass** die Sitzanordnung weiter zwei Schutzflügel (331), die an jeweils zwei Seiten der unteren Rückenlehne (33) montiert sind, zwei Achsen (333), die in der unteren Rückenlehne (33) montiert sind, ein unterer Rückenlehnenzylinder (332), der in der unteren Rückenlehne (33) montiert ist, und zwei Verbindungsdrähte (3321) enthält, die jeweils rund um die entsprechenden Achse (333) angebracht sind, wobei jeder mit dem ersten Ende mit dem unteren Rückenlehnenzylinder (332) und mit einem zweiten Ende mit dem entsprechenden Schutzflügel (331) verbunden ist, so dass, wenn der untere Rückenlehnenzylinder (332) nach außen ausgedehnt wird, die Schutzflügel (331) durch die Verbindungsdrähte (3321) zueinander hin bewegt werden.

7. Auto gemäß Anspruch 4, **dadurch gekennzeichnet, dass** die Sitzanordnung (3) weiter einen Befestigungsbalken (322), der drehbar in der oberen Rückenlehne (32) montiert ist und an der Kopfstütze (34) befestigt ist, um die Kopfstütze (34) zu drehen, zwei Abdeckungen (3221), die in der oberen Rückenlehne (32) montiert sind, um den Befestigungsbalken (322) abzudecken, eine Antriebsscheibe (3222), die auf dem Befestigungsbalken (322) befestigt ist, um den Befestigungsbalken (322) zu drehen, zwei Drähte (3223), die jeweils mit einem ersten Ende mit der Antriebsscheibe (3222) verbunden sind, ein Kopfstützenzylinder (324), der in der oberen Rückenlehne (32) montiert und mit einem zweiten Ende eines der Drähte (3223) verbunden ist, und ein elastisches Teil (323) enthält, das in der oberen Rückenlehne (32) montiert ist und mit einem zweiten Ende des anderen Drahtes (3223) verbunden ist, so dass, wenn der Kopfstützenzylinder (324) betätigt und ausgedehnt wird, die Antriebsscheibe (3222) durch einen der Drähte gedreht wird, um den Befestigungsbalken (322) zu drehen, um so die Kopfstütze (34) zu drehen.

8. Auto gemäß Anspruch 5 oder 6, **dadurch gekennzeichnet, dass** die ersten Zylinder (2112), die zweiten Zylinder (2242), die dritten Zylinder (2221), die vierten Zylinder (2321), die fünften Zylinder (2331), die Zylindereinheiten (36) und der untere Rückenlehnenzylinder (332) doppeltwirkende Hydraulikzylinder sind.

9. Auto gemäß Anspruch 1, **dadurch gekennzeichnet, dass** jeder der Zylinder der Fahrzeugkarosserie mit einer Hebelplatte (111) ausgestattet ist, deren entferntes Ende mit einem Hebelpunkt (112) ausgestattet ist.

10. Auto gemäß Anspruch 5, 6 oder 7, **dadurch gekennzeichnet, dass** die ersten Zylinder (2112) mit den Zylindern (11) am vorderen Teil, zwei Seiten des vorderen Teils, dem hinteren Teil und zwei Seiten des hinteren Teils der Fahrzeugkarosserie (1) verbunden sind, dass die zweiten Zylinder (2242) mit den Zylindern (11) an der linken Seite und an der rechten Seite der Fahrzeugkarosserie (1) verbunden sind, dass der dritte Zylinder (2221) mit den Zylindern (11) an zwei Seiten des vorderen Teils, zwei Seiten des hinteren Teils, der linken Seite und der rechten Seite der Fahrzeugkarosserie (1) verbunden ist, dass die vierten Zylinder (2321) mit den Zylindern (11) am vorderen Teil und zwei Seiten des vorderen Teils der Fahrzeugkarosserie (1) verbunden ist, dass der fünfte Zylinder (2331) mit den Zylindern (11) an der linken Seite und der rechten Seite der Fahrzeugkarosserie (1) verbunden ist, dass der untere Rückenlehnenzylinder (332) mit den Zylindern (11) am vorderen Teil, zwei Seiten des vorderen Teils, der linken Seite und der rechten Seite der Fahrzeugkarosserie (1) verbunden ist, dass die Zylindereinheiten (36) mit dem hinteren Teil und zwei Seiten des hinteren Teils der Fahrzeugkarosserie (1) verbunden ist, und der Kopfstützenzylinder (324) mit zwei Seiten des hinteren Teils der Fahrzeugkarosserie (1) verbunden ist.

## Revendications

1. Voiture, comprenant :
une carrosserie de voiture (1) dotée d'une périphérie pourvue d'une pluralité de vérins (11) ; un système de siège de sécurité fixé dans la carrosserie de voiture (1) et relié à chacun des vérins (11) ;
le système de siège de sécurité comprenant un culbuteur (2) comprenant :
une première unité d'encadrement (21) comprenant un cadre de base (211) creux, une tige de base (2111) fixée sur une extrémité avant du cadre de base (211), deux tiges pivot (212), fixées chacune sur le cadre de base (211) et deux tiges de support (213) fixées chacune entre les tiges pivot (212) et pourvues chacune de deux sièges coulissants (2130) ;
une seconde unité d'encadrement (22) comprenant deux tiges de transition (224) fixées chacune entre les tiges de support (213) de la première unité d'encadrement (21) et ayant chacune deux extrémités fixées chacune sur le siège coulissant (2130) respectif de la tige de support (213) respective, deux pattes de support (221) fixées chacune sur la tige de transition (224) respective, une première tige de jonction (222) fixée entre les premières extrémités des pattes de support (221), une seconde tige de jonction (223) fixée entre les parties intermédiaires des pattes de support (221) et une tringlerie (225) fixée entre les pattes de support (221) ;
une troisième unité d'encadrement (23) comprenant un cadre pivot (231) ayant une première tige de liaison (2310) fixée entre les secondes extrémités des pattes de support (221), une seconde tige de liaison (2311) fixée sur la tringlerie de la seconde unité d'encadrement (22), une tige pivot (2312) fixée entre les premières extrémités de la première tige de liaison (2310) et de la seconde tige de liaison (2311) et une plaque de jonction (2313) fixée entre les secondes extrémités de la première tige de liaison (2310) et de la seconde tige de liaison (2311), une glissière (232) fixée de façon coulissante entre la première tige de liaison (2310) et la seconde tige de liaison (2311) du cadre pivot (231), et une tige de guidage (233) fixée entre la tige pivot (2312) et la plaque de jonction (2313) du cadre pivot (231) et déployée à travers la glissière (232) ;
une quatrième unité d'encadrement (24) comprenant une première barre (241) pourvue de deux paires de plaques pivot (2411) reliées à la première tige de liaison (2310) et à la seconde tige de liaison (2311), une seconde barre (242) fixée de façon pivotante sur la glissière (232) de la troisième unité d'encadrement (23) et deux plaques de jonction (243) fixées chacune entre la première barre (241) et la seconde barre (242) ;
une cinquième unité d'encadrement (25) comprenant un cadre de fixation (251) fixé sur la première barre (241) et la seconde barre (242) de la quatrième unité d'encadrement (24) ;
deux premiers vérins (2112) ayant chacun une première extrémité fixée sur la tige de base (2111) de la première unité d'encadrement (21) et une seconde extrémité fixée sur une des pattes de support (221) de la seconde unité d'encadrement (22) ;
deux seconds vérins (2242) ayant chacun une première extrémité fixée sur le siège coulissant (2130) respectif de la première unité d'encadrement (21) et
une seconde extrémité fixée sur la seconde tige de jonction (223) de la seconde unité d'encadrement (22) ;
un troisième vérin (2221) ayant une première extrémité fixée sur la première tige de jonction (222) de la seconde unité d'encadrement (22) et une seconde extrémité fixée sur la tringlerie de la seconde unité d'encadrement (22) ;
deux quatrièmes vérins (2321) ayant chacun une première extrémité fixée sur la tige pivot (2312) de la troisième unité d'encadrement (23) et une seconde extrémité fixée sur la glissière (232) de la troisième unité d'encadrement (23) ;
un cinquième vérin (2331) ayant une première extrémité fixée sur la tringlerie de la seconde unité d'encadrement (22) et une seconde extrémité fixée sur la tige de guidage (233) de la troisième unité d'encadrement (23).

2. Voiture selon la revendication 1, dans laquelle la tringlerie de la seconde unité d'encadrement (22) comprend deux plaques de guidage (226) fixées chacune sur la première extrémité de la patte de support (221) respective et formées chacune avec une fente de guidage (2260), deux rails de guidage (2211) renforcés fixés chacun sur la patte de support (221) respective et positionnés chacun à côté de la seconde tige de jonction (223), une tige d'actionnement (227) fixée de façon mobile entre les rails de guidage (2211) et limitée par la seconde tige de jonction (223), deux plaques d'actionnement (2271) ayant chacune une première extrémité fixée sur la tige d'actionnement (227), une tige transversale (2251) fixée entre les secondes extrémités des plaques d'actionnement (2271), deux plaques de jonction (2252) ayant chacune une première extrémité fixée sur une des deux extrémités de la tige transversale (2251), deux tiges de jonction (2255) ayant chacune une première extrémité fixée sur une seconde extrémité de la plaque de jonction (2252) respective, deux cornes (2254) fixées chacune de façon mobile sur la plaque de guidage (226) respective et ayant chacune un premier côté fixé sur une seconde extrémité de la tige de jonction (2255) respective et un second côté pourvu d'une tige entraînée (2253) pouvant se déplacer dans la fente de guidage (2260) de la plaque de guidage (226) respective.

3. Voiture selon la revendication 2, dans laquelle la seconde extrémité du troisième vérin (23) est fixée sur la tige transversale de la seconde unité d'encadrement (22), la première extrémité du cinquième vérin (25) est fixée sur la tige d'actionnement (227) de la seconde unité d'encadrement (22) et la seconde tige de liaison (2311) de la troisième unité d'encadrement (23) est fixée entre les cornes de la seconde unité d'encadrement (22).

4. Voiture selon la revendication 1, dans laquelle le système de siège de sécurité comprend en outre un ensemble de siège (3) fixé sur une partie supérieure du culbuteur (2) et comprenant un siège (31), un dossier inférieur (33) fixé sur le siège (31), un dossier supérieur (32) fixé sur le dossier inférieur (33) et un appuie-tête (34) fixé sur le dossier supérieur (33).

5. Voiture selon la revendication 4, dans laquelle l'ensemble de siège (3) comprend en outre un arbre (35) fixé sur une jonction du dossier supérieur (32) et du dossier inférieur (33), deux plaques d'entraînement (351) fixées sur deux extrémités de l'arbre (35) respectivement, deux talons (352) fixés chacun sur la plaque d'entraînement (351) respective, deux unités de vérin à inclinaison vers l'avant (36) reliées chacune au talon (352) respectif et deux colonnes (321) fixées chacune dans le dossier supérieur (32) et reliées chacune aux unités de vérin (36) respectives de sorte que lorsque les unités de vérin (36) sont déployées vers l'extérieur, le dossier supérieur (32) et l'appuie-tête (34) sont soulevés de façon inclinée vers l'avant par rapport au dossier inférieur (33).

6. Voiture selon la revendication 4, dans laquelle l'ensemble de siège comprend en outre deux ailes protectrices (331) respectivement fixées sur deux côtés du dossier inférieur (33), deux arbres pivot (333) fixés dans le dossier inférieur (33), un vérin de dossier inférieur (332) fixé dans le dossier inférieur (33) et deux câbles de jonction (3321) fixés chacun autour de l'arbre pivot (333) respectif et ayant chacun une première extrémité reliée au vérin de dossier inférieur (332) et une seconde extrémité reliée à l'aile protectrice (331) respective, de sorte que lorsque le vérin de dossier inférieur (332) est déployé vers l'extérieur, les ailes protectrices (331) sont déplacées l'une vers l'autre par les câbles de jonction (3321).

7. Voiture selon la revendication 4, dans laquelle l'ensemble de siège (3) comprend en outre une barre de fixation (322) fixée de façon pivotante dans le dossier supérieur (32) et fixée à l'appuie-tête (34) pour faire pivoter l'appuie-tête (34), deux caches (3221) fixés dans le dossier supérieur (32) pour recouvrir la barre de fixation (322), un disque d'entraînement (3222) fixé à la barre de fixation (322) pour faire pivoter la barre de fixation (322), deux câbles (3223) ayant chacun une première extrémité reliée au disque d'entraînement (3222), un vérin d'appuie-tête (324) fixé dans le dossier supérieur (32) et relié à une seconde extrémité d'un des câbles (3223) et un élément élastique (323) fixé dans le dossier supérieur (32) et relié à une seconde extrémité de l'autre câble (3223), de sorte que lorsque le vérin d'appuie-tête (324) est actionné et déployé, le disque d'entraînement (3222) est pivoté par un des câbles (3223) pour faire pivoter la barre de fixation (322) de façon à faire pivoter l'appuie-tête (34).

8. Voiture selon la revendication 5 ou 6, dans laquelle les premiers vérins (2112), les seconds vérins (2242), le troisième vérin (2221), les quatrièmes vérins (2321), le cinquième vérin (2331), les unités de vérin (36) et le vérin de dossier inférieur (332) sont des vérins hydrauliques bidirectionnels.

9. Voiture selon la revendication 1, chacun des vérins de la carrosserie de voiture étant pourvu d'une plaque d'entraînement (111) de type levier ayant une extrémité distale pourvue d'un point d'oscillation (112).

10. Voiture selon la revendication 5, 6 ou 7, dans laquelle les premiers vérins (2112) sont reliés aux vérins (11) au niveau de la partie avant, de deux côtés de la partie avant, de la partie arrière et de deux côtés de la partie arrière de la carrosserie de voiture (1), les seconds vérins (2242) sont reliés aux vérins (11) au niveau du côté gauche et du côté droit de la carrosserie de voiture (1), le troisième vérin (2221) est relié aux vérins (11) au niveau des deux côtés de la partie avant, de deux côtés de la partie arrière, du côté gauche et du côté droit de la carrosserie de voiture (1), les quatrièmes vérins (2321) sont reliés aux vérins (11) au niveau de la partie avant et des deux côtés de la partie avant de la carrosserie de voiture (1), le cinquième vérin (2331) est relié aux vérins (11) au niveau du côté gauche et du côté droit de la carrosserie de voiture (1), le vérin de dossier inférieur (332) est relié aux vérins (11) au niveau de la partie avant, de deux côtés de la partie avant, du côté gauche et du côté droit de la carrosserie de voiture (1), les unités de vérin (36) sont reliées à la partie arrière et aux deux côtés de la partie arrière de la carrosserie de voiture (1) et le vérin d'appuie-tête (324) est relié aux deux côtés de la partie arrière de la carrosserie de voiture (1).
